Europäisches Patentamt

European Patent Office

Office européen des brevets

(19)

(11) Publication number: **0 440 089 A2**

# EUROPEAN PATENT APPLICATION

(21) Application number: **91100904.1**

(22) Date of filing: **24.01.91**

(51) Int. Cl.⁵: **F24F 5/00**

(30) Priority: **31.01.90 SE 9000323**

(43) Date of publication of application:
**07.08.91 Bulletin 91/32**

(84) Designated Contracting States:
**AT BE CH DE DK ES FR GB GR IT LI LU NL SE**

(71) Applicant: **Adamsson, Bo Lennart**
**Notariegatan 11B**
**S-216 11 Malmö(SE)**

Applicant: **Ottosson, Lars Göran**
**Eslöv 3**
**S-241 91 Eslöv(SE)**

Applicant: **MOBERGS GLAS AB**
**Bruksgatan 7A**
**S-241 39 Eslöv(SE)**

(72) Inventor: **Adamsson, Bo Lennart**
**Notariegatan 11B**
**S-216 11 Malmö(SE)**
Inventor: **Ottosson, Lars Göran**
**Eslöv 3**
**S-241 91 Eslöv(SE)**

(74) Representative: **Wagner, Karl Heinz**
**H. Wagner & Co. AB Norra Vallgatan 72**
**S-211 22 Malmö(SE)**

(54) **Method of solving indoor-climatic conditions within glass facades and device for carrying out said method.**

(57) The present invention relates to a method of solving indoor-climatic conditions within glass facades and a device for carrying out said method. This is done by providing an inner pane (3) within the glass facade (1) at such a distance therefrom that a climatizable space (4) is defined between said glass facade (1) and said inner pane (3); cooling the air or gas during the summer by means of one or more aggregates (5) in dependence of the desired surface temperature on the inner pane (3) and bringing it to flow in vertical direction (arrow K) along the glass facade (1) and the inner pane (3) by circulation thereof in the space (4); and locating the aggregate (5) inside the space (4). The device therefor has within the glass facade (1) at least one inner pane (3) at such a distance from the glass facade (1) that a climatizable space (4) is defined between said glass facade (1) and said inner pane (3) and one or more aggregates is or are located in said space (4) in order to, during the summer, cool air or gas in said space (4) in dependence of the surface temperature of the inner pane (3).

EP 0 440 089 A2

# METHOD OF SOLVING INDOOR-CLIMATIC CONDITIONS WITHIN GLASS FACADES AND DEVICE FOR CARRYING OUT SAID METHOD.

The present invention relates to a method of solving indoor-climatic conditions within glass facades. The invention also relates to a suitable device for carrying out said method.

If anyone for architectonic reasons wants a facade or face entirely of glass, one of the best pane units is today three-glass insulating panes with a low-emission layer and argon gas in the space between the panes. During the winter, at temperatures of 15°C outdoors at +20°C indoors, such a pane will have an indoor surface temperature of +13,2°C. This is too low a surface temperature for being comfortable. The operative temperature, i.e. the average value of surface temperature and air temperature, will be as low as +16,6°C close to the facade.

During the summer, at +24°C outdoors and +24°C indoors, and full solar radiation of the facade or face, the inner pane will get a surface temperature of +35°C, which is also very incomfortable. An inner sun shield, e.g. a close white curtain, will stop much of the solar transmission to the room, but a part of the solar radiation is absorbed by the curtain, the temperature of which will rise to +40-50°C.

The object of the present invention is to provide a method of solving the indoor-climatic conditions within glass facades. This is arrived at according to the invention by means of the characterizing features of claim 1. Another object of the invention is to provide a simple device for carrying out said method and this is arrived at by means of the characterizing features of claim 8.

By means of the method and device of the invention, it is possible, during the summer and preferably when using a bright and close sun shield curtain and this curtain is drawn down such that it lies close to the sides and leaves an about 100 mm wide slit at the top and at the bottom to permit circulation thereabout, to theoretically add 471 W/m in order to keep the temperature of the inner pane at +24°C, i.e. as the indoor air temperature. The need for cooling inside the room will then be only 146 W/m, i. e. 617 W/m in total. As a comparison it can be mentioned that with only a sun shield curtain inside the pane unit, the cooling need in the room will be 663 W/m, which is somewhat higher than above and which is so high that it is douptful if such a cooling requirement can be added or satisfied in a comfortable way. An especially constructed, full-scale test device in a laboratory has shown that the same surface temperature on the pane surface as the indoor air temperature is reached with a cooling-coil battery with a cooling water temperature of +14°C and propeller fans. The measured cooling effect was 400 W, which is close to the calculations. The absorbed solar radiation in the curtain was simulated with a heat foil provided as a sun shield curtain and the pane surface corresponding to the inner pane of the pane unit of the facade was kept at +35°C, i.e. close to the calculated temperature of +37,9°C. Thus, tests confirm the calculations made.

At a method and device according to claims 2 and 9. it is sufficient, during the coldest period of the winter, to add about 90 W/m for keeping the surface temperature of the inner pane at +18°C even though the outdoor temperature is -15°C.

Thus, the method according to the invention permits keeping the inner pane surface at the temperature required for the desired comfort. It is possible without any appreciable extra energy consumption to maintain an operative temperature close to the pane of +19-24°C throughout the year.

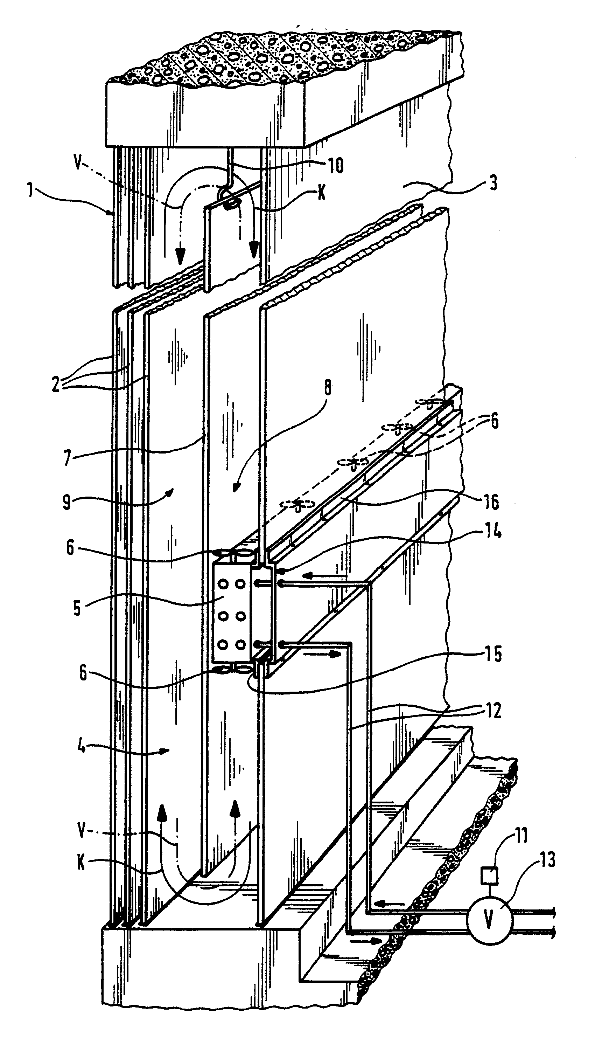

The invention will be further described below with reference to the accompanying drawing, which with a perspective view illustrates a glass facade according to the invention at which the method of the invention is utilized.

In the figure there is schematically shown a glass facade or face 1 made of storey-high three-glass insulating panes 2 with a selective layer on the outside of the inner pane and with argon in the gaps between the panes 2 (the gaps can have a width of e.g. 12 mm). This glass facade is preferably prefabricated and in this condition positioned and fixed in an opening in the building in question. Within this glass facade 1 there is preferably in said opening also mounted at least one inner pane 3 at such a distance from the glass facade 1 that a climatizable space 4 (having a width of e.g. 290 mm) is defined between said glass facade 1 and said inner pane 3. The inner pane 3 is preferably a separate unit relative to the glass facade 1.

One or more aggregates 5 are provided in the space 4 for tempering the air or another suitable gas in the space 4 with regard to the surface temperature at the inner pane 3. The air or another gas in the space 4 may self-circulate or be brought to circulate by means of one or more fan aggregates 6. These are only schematically shown with propellers in the figure and can be mounted on the aggregate 5 or in any other suitable place. The air or other gas in the space 4 is through self-circulation of by means of the fan aggregates 6 brought to circulate in vertical direction along the glass facade 1 and the inner pane 3.

During cooling, the air or other gas is through self-circulation or by means of the fan aggregates 6 brought to flow preferably downwards along the inner pane 3 and upwards along the glass facade 1 (solid-line arrows K in the figure). The aggregate 5 can be a heating and cooling aggregate which is adapted to cool the air or gas in the space 4 during the summer and heat it during the winter. During heating, the air is brought to flow upwards along the inner pane 3 and downwards along the glass facade 1 (arrows V in dashed and dotted lines in the figure).

In order to reverse the direction of circulation when the circulation is "supported" by fan aggregates 6, one can use at least one reversible fan aggregate 6 or at least one reversible fan aggregate 6 at another location, which brings the air or other gas to flow in one direction and at least one second fan aggregate 6 or at least one other fan aggregate for bringing the air or other gas to flow in the opposite direction. The different fan aggregates 6 can be mounted above and beneath the heating and cooling aggregate 5 as is schematically shown in the figure.

For controlling and guiding the circulation in the space 4, one can use jet fans or preferably provide a vertically directed intermediate wall 7 therein, whereby two vertical slits 8, 9 (each slit having a width of e.g. 100 mm) are defined. The intermediate wall 7 has such a less height than the space 4 and is suspended in suspension elements 10 such that the slits 8, 9 communicate with each other above and beneath said intermediate wall 7, whereby air or other gas can flow from one slit to the other at the bottom or at the top of the space 4 (the distance between the upper and lower edges respectively of the intermediate wall and the upper and lower limiting surface respectively of the space is e.g. 100 mm).

In order to completely or partially reduce the solar radiation incident on the facade wall, the intermediate wall 7 is preferably designed as a sun shield and/or is a separate sun shild provided in the space 4 for the same purpose. The intermediate wall 7 or a separate sun shield can e.g. be a sun shield curtain which is preferably bright and close and lowerable such that it lies close to the side walls of the space 4. The intermediate wall 7 and/or a separate sun shield can alternatively be a pane, a screen, a jalousie or a Venetian blind.

The aggregate 5 is preferably located in the opening in the building intended for the glass facade 1 and eventually for the extra pane 3 and said aggregate 5 can be situated on or at the inner pane 3, e.g. in the slit 8 closest thereto. Preferably, the aggregate 5 extends along at least the major part of the length of the space 4 or is divided into a number of units extending along at least the major part of the length of the space 4.

Furthermore, the aggregate 5 is preferably situated a short distance up in the space 4, e.g. at a distance of 60-90 cm above the bottom of the space 4.

The aggregate 5 is controlled preferably by at least one indoor-temperature dependent transmitter 11 which is located at a suitable spot within the inner pane 3 and which controls the aggregate 5 to temperature the air or other gas in the space 4 in dependence on the desired value for the surface temperature on the inner pane 3.

The aggregate 5 can be operated by water through a conduit system 12, and if said aggregate is a heating and cooling aggregate, it can be fed with cold water for cooling and with warm water for heating the air or other gas in the space 4. In the conduit system 12 there may be a valve 13 which is controlled or operated by the indoor-temperature dependent transmitter 11.

The aggregate 5 can be mounted directly into the inner pane 3 or be connected to a profile moulding 14, preferably consisting of a material having a low heat transfer capacity. Such a profile moulding may include coupling portions 15, 16 for sealingly connection of lower and upper parts of the inner pane 3.

The method according to the invention is not limited to what is described above but may vary within the scope of the following claims. The function and design of the device according to the invention may also vary within the scope of the following claims. Thus, the inner pane may be displaceable or in another way momentarily removable for access to the space and for being able to clean the inside of the glass facade and/or the inner pane. Furthermore, the glass facade may comprise another number of panes than three and there may be more than one inner pane.

As an alternative to an aggregate for temperating the air, there may be several such aggregates located above each other and/or located in different slits in the space and/or built into the lower parts of the space.

The heating part of the aggregate may also be electrically operated instead of being operated by heat carried by water.

The fan aggregates can be mounted in other ways than described and shown and there may be more than one intermediate wall in order to define more than two slits.

Finally, it should be mentioned that the abovementioned exemplified measures of the space and slits may vary as required.

## Claims

1. Method of solving indoor-climatic conditions within glass facades (1), **characterized in**

that within the glass facade (1) there is provided an inner pane (3) at such a distance from the glass facade (1) that a climatizable space (4) is defined between said glass facade (1) and said inner pane (3);

that air or gas during the summer is cooled by means of one or more aggregates (5) in dependence of the desired surface temperature on the inner pane (3) and is brought to flow in vertical direction (arrow K) along the glass facade (1) and the inner pane (3) by circulation thereof in the space (4); and

that the aggregate (5) is located inside the space (4).

2. Method according to claim 1, **characterized in** that air or gas during the winter is heated with the same aggregate (5) in dependence of the desired surface temperature on the inner pane (3) and is brought to flow in vertical direction (arrow V) along the glass facade (1) and the inner pane (3) by circulation thereof in the space (4).

3. Method according to claim 2, **characterized in** that the air or other gas is subjected to cooling or heating in either of the slits (8 or 9).

4. Method according to claim 2 or 3, **characterized in** that the air or other gas during cooling is circulated in the space (4) to flow downwards along the inner pane (3) and upwards along the glass facade (1) and that the air or other gas during heating is circulated to flow upwards along the inner pane (3) and downwards along the glass facade (1).

5. Method according to any preceding claim. **characterized in** that air or other gas is brought to flow upwards in a slit (8 or 9) and downwards in another slit (9 or 8) in the space (4) and from one slit to the other in lower and upper parts of said space (4).

6. Method according to any preceding claim, **characterized in** that solar radiation incident onto the glass facade (1) is completely or partially reduced in the space (4) between the glass facade (1) and the inner pane (3).

7. Method of solving indoor-climatic conditions within prefabricated glass facades (1), **characterized in**

that the prefabricated glass facade (1) is located and fixed in an opening therefor in a building;

that a separate pane (3) is located and fixed in said opening within said glass facade (1) and at a suitable distance therefrom;

that air or gas during the summer is cooled by means of one or more aggregates (5) in dependence of the desired surface temperature on the inner pane (3) and is brought to flow in vertical direction (arrow K) along the glass facade (1) and the inner pane (3) by circulation thereof in the space (4): and

that the aggregate (5) is mounted inside the space (4).

8. Device for carrying out said method of solving indoor-climatic conditions within glass facades (1), **characterized in** that within the glass facade (1) there is provided at least one inner pane (3) at such a distance from the glass facade (1) that a climatizable space (4) is defined between said glass facade (1) and said inner pane (3) and that one or more aggregates is or are located in said space (4) in order to, during the summer, cool air or gas in said space (4) in dependence of the surface temperature of the inner pane (3).

9. Device according to claim 8, **characterized in** that the aggregate is a heating and cooling aggregate (5) which is provided to heat air or other gas in the space (4) during the winter and cool said air or other gas during the summer.

10. Device according to claim 8 or 9, **characterized in** that the aggregate (5) includes one or more fan aggregates (6), preferably propeller fans, mounted on said aggregate (5) and provided to circulate the air or other gas in the space (4) and bring it to flow in vertical direction along the glass facade (1) and the inner pane (3).

11. Device according to claim 8, **characterized in** that the aggregate (5) is located in the space (4) on or at the inner pane (3) or is preferably located in the inner pane (3), extending preferably along at least the major part of the length of said pane (3), whereby said aggregate (5) is located preferably 60-90 cm above the bottom of the space (4).

12. Device according to any of claim 8-11, **char-**

acterized in that the aggregate (5) is controlled by at least one indoor-temperature dependent transmitter (11) which is mounted inside the inner pane (3) and which operates said aggregate (5) to temperate the air or other gas in the space (4) in dependence of the desired value of the surface temperature on the inner pane (3).

13. Device according to claim 10, **characterized in** that the fan aggregate (6) is designed and located in order to, during cooling of the air or other gas in the space (4), bring said air or other gas to flow downwards along the inner pane (3) and upwards along the glass facade (1), and in order to, during heating of said air or other gas, bring said air or other gas to flow upwards along the inner pane (3) and downwards along the glass facade (1).

14. Device according to any of claim 8-13, **characterized in** that the space (4) is provided with a vertically directed intermediate wall (7), preferably a screen, jalousie Venetian blind or curtain, which devides said space (4) into two vertically extending slits (8, 9) and which permits communication between said slits (8, 9) at the top and at the bottom of said space (4) such that air or other gas flowing through one slit can flow into the other slit, whereby the intermediate wall (7) also can be used for reducing incident solar radiation.

15. Device according to any of claim 8-14, **characterized in** that the aggregate (5) is mounted in an opening in a building in which the glass facade (1) and the pane (3) within said glass facade (1) are provided.